# EUROPÄISCHE PATENTSCHRIFT

(11) **EP 1 468 977 B1**
(45) Veröffentlichungstag und Bekanntmachung des Hinweises auf die Patenterteilung: **02.09.2009**
(21) Anmeldenummer: 04450089.0
(22) Anmeldetag: 15.04.2004
(51) Int. Cl.: C05F 17/00

(54) **Verfahren zum Belüften von Rotte**
Process for aerating compost
Procédé pour l'aération de compost

(30) Priorität: 15.04.2003 AT 5802003
(43) Veröffentlichungstag der Anmeldung: 20.10.2004
(73) Patentinhaber: Harrer, Ewald, 3544 Idolsberg (AT)
(72) Erfinder: Hanke, Reinhart, 8700 Leoben (AT); Harrer, Ewald, Dipl.Ing., A-1040 Wien (AT)
(74) Vertreter: Haffner, Thomas M.

(56) Entgegenhaltungen:
- EP-A- 0 244 391
- EP-A- 0 329 643
- EP-A- 0 577 236
- EP-A- 0 676 385

## Beschreibung

Die Erfindung bezieht sich auf ein Verfahren zum Belüften von Rotte, bei welchem die Luft durch die Rotte in einem geschlossenen Raum hindurchgesaugt wird und die Rotteabluft durch ein Biofilter geleitet wird.

Die Verrottung von Rottegut kann mengenabhängig in Hallen oder geschlossenen Reaktoren vorgenommen werden. Die Verrottung führt hierbei zu Prozessabluft, welche neben einer erheblichen Geruchsbelästigung auf niedrigem Temperaturniveau anfällt, wobei die wirtschaftliche Nutzung der Abwärme der Prozessabluft relativ aufwendig und damit unwirtschaftlich ist. Bei der Verrottung entstehen gasförmige Zersetzungsprodukte, und insbesondere CO₂, wobei das Rotteverfahren zumeist auch eine Bewässerung bzw. hohe Feuchtigkeiten erfordert, um den mikrobiellen Abbau zu begünstigen.

Feuchte und in der Regel übel riechende Abluft kann nicht ohne weiteres in die Atmosphäre abgelassen werden. Im Übrigen schreiben einschlägige Vorschriften für die Führung von Abfallentsorgungsverfahren bereits vor, dass die für die Verrottung bzw. Entsorgung erforderliche Luft mengenmäßige Grenzwerte nicht übersteigen darf.

Für das Desodorieren von feuchter, übel riechender Rotteabluft wurden bereits Biofilter vorgeschlagen. Der EP 329 643 A1 ist in diesem Zusammenhang ein bepflanztes Festbettfilter zu entnehmen. Auch der DE 44 06 363 A1 ist ein Rotteverfahren zu entnehmen, bei welchem die aus der Rotte austretende Luft durch ein Biofilter geleitet wird. Bei geeigneter Biozönose, und insbesondere bei mit Nutzpflanzen bepflanzten Filterbeeten, gelingt es CO₂ umzusetzen, sodass in vorteilhafter Weise die CO₂-Konzentration der durch das Festbettfilter geleiteten Gase auf entsprechend geringe Werte, und insbesondere auf Werte unter 4 Vol.%, abgesenkt werden. Das bekannte Filterbeet wurde vor allem zur Reinigung von Rauchgasen eingesetzt, wobei hier naturgemäß eine entsprechende Kühlung der Rauchgase erforderlich war um die Biozönose nicht zu gefährden. Besonders vorteilhaft konnte Ablufttemperatur und Abgasfeuchte bei Rotteabluft genutzt werden, sodass die erforderliche Unterkühlung unter den Taupunkt zur Herabsetzung der relativen Feuchtigkeit bei Einsatz von Rotteabluft entfallen konnte und Abgase in mit Wasserdampf gesättigtem Zustand eingesetzt werden konnten. Eine derartige Verfahrensweise erlaubte es zusätzliches Gießwasser für die Nutzpflanzen oder Zierpflanzen im Biofilter entbehrlich zu machen.

Die Erfindung zielt nun darauf ab, diese bekannten Biofilter in einem Belüftungsverfahren einzusetzen, bei welchem die Gesamtmenge an benötigter Luft herabgesetzt werden kann und gleichzeitig eine Geruchsbelästigung durch den Rotteprozess vollständig unterbunden werden kann.

Zur Lösung dieser Aufgabe ist das erfindungsgemäße Verfahren zum Belüften von Rotte im Wesentlichen dadurch gekennzeichnet, dass die durch die Rotte in einem geschlossenen Raum hindurchgesaugte Luft auf Temperaturen zwischen 10 und 35°C gekühlt wird, dass die so gekühlte Abluft gegebenenfalls gemeinsam mit Umgebungsluft durch ein in einem geschlossenen Raum angeordnetes Festbett-Biofilter geleitet wird und dass die aus dem Biofilter abgezogene Filterabluft mit trockener Frischluft versetzt und entfeuchtet und neuerlich durch die Rotte gesaugt wird. Dadurch, dass ein geschlossener Raum vorgegeben ist, wobei die Luft durch die Rotte in einem geschlossenen Raum hindurchgesaugt und auf die maximal zulässigen Temperaturen für das nachfolgende Biofilter gekühlt wird, kann die gekühlte Abluft, deren relative Feuchte in der Regel nahe der Sättigung ist oder gegebenenfalls auf sättigungswerte gebracht wird, durch das Festbett-Biofilter geleitet werden und anschließend neuerlich durch die Rotte gesaugt werden. Wenn das gesamte Verfahren in einem geschlossenen Raum nach Art eines Glashauses durchgeführt wird muse naturgemäß die Begehbarkeit des Glashauses gewährleistet werden, sodass die maximale Arbeitsplatzkonzentration an CO₂ ebenso wie der Dampfgehalt entsprechend geregelt werden muss. Gleichzeitig muss naturgemäß dann, wenn aus der Umgebungsluft wieder neuerlich die entsprechende Belüftungsluft für Rotte angesaugt werden soll, eine entsprechende Konditionierung vorgenommen werden. Das erfindungsgemäße Verfahren ist daher so geführt, dass die aus dem Biofilter abgezogene Filterabluft mit trockener Frischluft versetzt und entfeuchtet wird, bevor sie der Rotte rückgeführt wird. Auf diese Weise gelingt es zum Einen die Prozessabluft wirkungsvoll auf die gewünschten Temperaturen von beispielsweise etwa 25°C zu kühlen und die Abluft im Biofilter mit niedriger hydraulischer Belastung und niedriger Betriebstemperatur unter entsprechender Verbesserung des Filterwirkungsgrades zu behandeln. Die Filterabluft, welche mit Frischluft gemischt wird, führt zu einer relativen Feuchte von unter 100% und eine derartige getrocknete Abluft bzw. ein derartiges Gemisch kann so eingestellt werden, dass eine Kondensation an den Wänden des geschlossenen Raumes, und insbesondere eines Glashauses, weitestgehend verhindert werden kann. Die aus der Prozessrohluft und der Frischluft gebildete Mischluft kann im Falle eines Überschusses als Abluft in die Atmosphäre gelassen werden, wobei hier naturgemäß nur Teilmengen ausgetragen werden und daher insgesamt der Luftverbrauch erniedrigt wird.

Prinzipiell ist zu beachten, dass niedrig belastete Filter, d.h. Filter mit 10 bis 20 Kubikmeter/Quadratmeter und Stunde relative hohe Flächen benötigen. Die Abluftkühlung produziert aber ganzjährig Abwärme für die ganzjährig nicht ohne weiteres eine entsprechende Verwendung gegeben ist. Durch den Betrieb des niedrig belasteten Biofilters als Gewächshaus kann diese Energie ganzjährig genutzt werden und die Wirtschaftlichkeit durch die entsprechende Zucht von Nutzpflanzen, wie beispielsweise von Gurken oder dergleichen, wesentlich erhöht werden.

Wesentlich für eine derartige ganzjährige wirtschaftliche Nutzung ist aber auch in einem Glashaus das Einhalten entsprechend niedriger CO₂-Gehalte in der Gewächshausatmosphäre, da hier die MAK-Werte berücksichtigt werden. Weiters muss für die Nutzung als Gewächshaus ein entsprechend niedriges Temperaturniveau im Filtermaterial in Abstimmung auf die Nutzpflanzen sowie die Erfordernisse des Zustands der Prozessrohluft eingehalten werden und schließlich eine entsprechende Absenkung der relativen Feuchte in der Gewächshausatmosphäre vorgenommen werden, um Kondensatbildung hintanzuhalten.

Bei Einhalten aller dieser Vorschläge wird das Verfahren bevorzugt so durchgeführt, dass die Rotte und das Biofilter in wenigstens einem geschlossenen Raum, insbesondere einer geschlossenen Halle, angeordnet sind, wobei, wie bereits erwähnt, besonders bevorzugt das Biofilter als Gewächshaus für Kulturpflanzen betrieben wird und mit der Rotteabluft befeuchtet und beheizt wird. Innerhalb der Halle bzw. des Glashauses, welche bzw. welches den geschlossenen Raum des Biofilters definiert, kann die Rotte in einem weiteren geschlossenen Raum angeordnet sein. Durch das Hindurchsaugen der Hallenluft durch die Rotte kann hier die Geruchsentwicklung im Gewächshaus minimiert werden, da die Rotteabluft erst nach passieren des Biofilters und damit nach ihrer Reinigung wieder in die Hallen- bzw. Gewächshausatmosphäre rückgeführt wird, welche selbst gegenüber der Umgebungsluft außerhalb des Gewächshauses unter leichtem Unterdruck stehen kann, um eine weitgehend vollständige Kreislaufführung sicherzustellen.

Die entsprechende Regelung gelingt in einfacher Weise dann, wenn so vorgegangen wird, dass der CO₂ Gehalt und der H₂O Dampfgehalt der Hallen- bzw. Gewächshausluft überwacht und durch zumischen von Frischluft auf CO₂-Werte unter der jeweiligen MAK und auf an Hallenwänden nicht kondensierenden H₂O Dampfkonzentrationen eingestellt wird. Eine derartige Rohluftkonditionierung, bei welcher Frischluft zur Einhaltung der entsprechenden gewünschten Parameter eingesetzt wird, führt durch die Frischluftzufuhr zu einer entsprechenden Kühlung und gleichzeitig zu einer entsprechenden Abnahme der relativen Feuchtigkeit. Die Trocknung der Filterabluft mit vorgewärmter Frischluft kann diesen Effekt im Winter noch verbessern, wobei im Sommer in aller Regel auf die Vorwärmung von Frischluft verzichtet werden kann.

Eine Vorwärmung von Frischluft hat aber nun notwendiger Weise zur Folge, dass die relative Feuchtigkeit abnimmt und es ist daher in diesen Fällen vorteilhaft, wenn die gekühlte Prozessabluft mit Wasserdampf gesättigter Frischluft verdünnt wird. Mit Vorteil wird hiebei so vorgegangen, dass die aus der Rotte abgezogene und dem Biofilter zugeführte Rotteabluft auf eine relative Luftfeuchtigkeit von 90 bis 100 Gew.%, vorzugsweise Wasserdampfsättigung, eingestellt wird.

Mit Rücksicht auf die Erfordernisse eines Gewächshauses wird das Verfahren in vorteilhafter Weise so durchgeführt, dass die Lufttemperaturen zwischen 20 und 30°C eingestellt werden, wobei zur Verringerung von Kondensaten in einfacher Weise die zur Einstellung einer nicht kondensierenden Hallen- bzw. Gewächshausluft verwendete Frischluft mit der aus der Rotte abgezogenen Luft, insbesondere über einen Wärmetauscher, vorgewärmt wird. Insgesamt kann der Wasserkreislauf des Frischluftwäschers beheizt werden, was von besonderem Vorteil im Winter sein kann, womit gleichzeitig die Funktion einer Notkühlung übernommen werden kann, wobei beispielsweise ein Teilstrom des Wassers über einen Kühlturm geführt wird.

Bei besonders problematischer Belastung der Prozessabluft, deren Zusammensetzung in hohem Maße vom Rottegut abhängig ist, kann dem niedrig belasteten Biofilter ein weiteres höher belastetes Filter vorgeschalten werden, das den gesamten Abluftstrom oder wenigstens einen Teilstrom aufnimmt. Bei gasförmigen Problemstoffen in der Prozessabluft, wie beispielsweise Ammoniak, wird statt eines hoch belastbaren Filters ein entsprechender Wäscher eingesetzt, wodurch gleichzeitig die entsprechende Befeuchtung für das Biofilter eingestellt werden kann.

Der Wärmehaushalt kann naturgemäß auch mittels einer Wärmepumpe auf dem vorherschenden niedrigen Temperaturenniveau in einfacher Weise geregelt werden, wobei die Prozessabluft an den Heizflächen des Verdampfers gekühlt werden kann und die Heizflächen des Kondensators der Frischluftvorwärmung, der Beheizung des Wasserkreislaufes im Frischluftwäscher, in der Notkühlung oder gegebenenfalls einer externen Wärmenutzung zugeführt werden können.

Mit besonderem Vorteil wird zu diesem Zweck so vorgegangen, dass eine Teilmenge der Frischluft über einen Wäscher geführt und befeuchtet wird und anschließend über einen Mischer der dem Biofilter zugeführten Rotteabluft zugeführt wird, wobei vorzugsweise der Wasserkreislauf des Frischluftwäschers mit Rotteabluft beheizt wird und schließlich mit Vorteil Abluftkondensate und Abschlämmungen von Kühlkreisläufen zur Nachfeuchtung des Rottegutes rückgeführt werden.

zusammenfassend ergibt das Verfahrenskonzept eine Reihe von synergistischen Vorteilen, welche sich erst aus dem Betrieb des Verfahrens in einem geschlossenen Raum, und insbesondere in einem Glashaus, bei gleichzeitiger Nutzung des Filters als mit Nutzpflanzen bepflanztes Beet ergeben. Die Frischluftvorwärmung wird hiebei als nasser Wärmetauscher betrieben, wobei ein besserer Wärmeübergang auf Grund der größeren Temperaturdifferenz, insbesondere im Sommer, bei gleichzeitiger Sättigung der Frischluft gewährleistet ist. Die trockene Frischluft muss in diesen Fällen allerdings getrennt erwärmt werden.

Abluftkondensate und Abschlämmungen von Kühlkreisläufen können in einem gemeinsamen Reservoir für Kühlwässer, Nachfeuchtwasser für die Nachfeuchtung des Rottegutes, Wäscherkreislauf und Kondensat gesammelt und behandelt werden, wobei das entsprechende Wasserreservoir auch als Teich ausgestaltet werden kann, um eine besonders gute Vergleichmäßigung der Wassertemperatur zu erzielen. Bei geringem Bedarf an konditionierter Prozessabluft kann diese auch zur Begasung von Freilandbeeten bzw. Filterbeeten eingesetzt werden. In diesem Falle wird keine trockene erwärmte Frischluft benötigt.

Zur Begasung von Gewächshäusern und/oder Filterbeeten sowie zur Rohluftkonditionierung können auch andere Abluftströme eingebunden werden. Insbesondere können zusätzlich Hallenabluft aus anderen Betrieben oder Rauchgase beigemischt werden.

Die Nutzung niedrig belasteter Biofilter mit niedriger Betriebstemperatur als Gewächshaus oder Filterbeet ermöglicht es Emisionen von Abgasströmen als Produktionsfaktoren zu nutzen, wobei neben der Abwärme und dem Abbau von CO₂ organischer Kohlenstoff in Carbonsäuren, Alkohole, Estern oder dergleichen umgesetzt werden kann. Auch Ammoniak, Schwefelverbindungen und Chloride können nach Sorption im Filterkörper von den Pflanzen genutzt werden.

In der Gesamtheit zeichnet sich das erfindungsgemäße Verfahren durch einen besonders geringen Einsatz an für die Durchführung des Prozesses benötigter Frischluft aus, da ein großer Teil der Luft im Kreislauf geführt werden kann, wodurch sich gleichzeitig die eingangs erwähnten Vorteil im Bezug auf die Verringerung der Geruchsbelästigung ergeben.

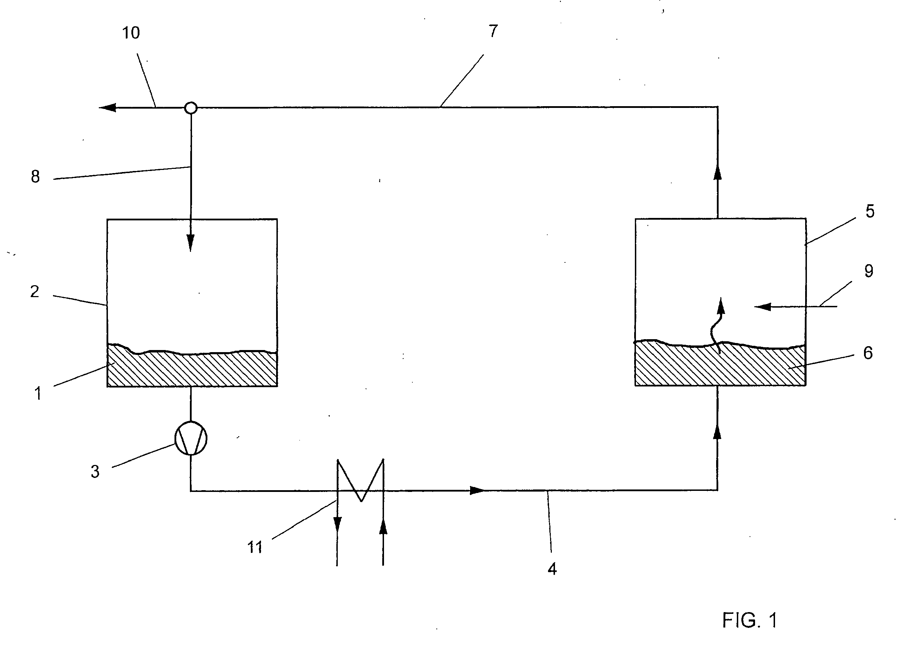

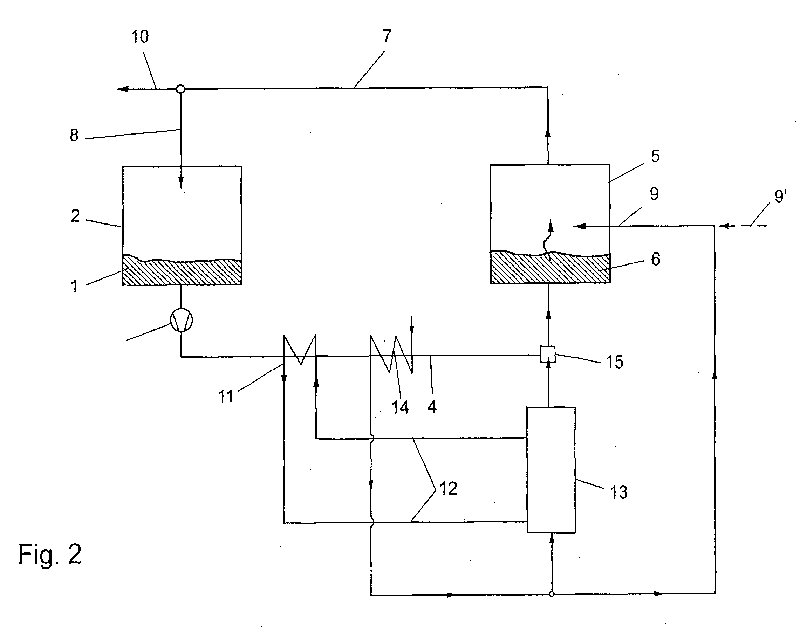

Die Erfindung wird nachfolgend anhand der Zeichnung näher erläutert. In dieser zeigen Fig.1 eine schematische Darstellung des Verfahrensablaufes in einer einfachen Vorrichtung und Fig.2 eine ergänzte Vorrichtung mit verbesserter thermischer Nutzung der Prozessabwärme.

In Fig.1 ist mit 1 ein Rottegut bezeichnet, welches sich in einem geschlossenen Reaktor 2 befindet. Durch das Rottegut wird Rotteabluft über ein Gebläse 3 abgesaugt und über eine Leitung 4 einem geschlossenen Festbett-Biofilter 5 zugeführt. Das Filtermaterial 6 im Inneren dieses Biofilters dient als Pflanzsubstrat und kann zum Anpflanzen von Nutzpflanzen verwendet werden. Die im Biofilter gereinigte Prozessabluft gelangt über die Rückführungsleitung 7 wiederum als Prozessrohluft über die Leitung 8 zum Reaktor, in welchem die Rotte belüftet werden soll, zurück.

Zum Konditionieren der Filterabluft kann über eine Leitung 9 Frischluft eingesetzt werden, wobei entsprechende Übermengen an produzierter Abluft über die Leitung 10 ausgeschleust werden können. Insgesamt können sowohl der geschlossene Rottebehälter als auch das geschlossene Biofilter in einem gemeinsamen Glashaus angeordnet sein, wobei im Falle der Anordnung in einem Glashaus das Festbett-Biofilter ohne ein gesondertes Filtergehäuse eingesetzt werden kann, da hier als Umhüllung bzw. zum Schließen des Biofilters die Wände des Glashauses dienen. Die im Kreislauf geführte Abluft, welche als Prozessrohluft wiederum durch den Rottereaktor hindurchgesaugt wird, muss in diesem Fall nicht über Leitungen 7 und 8 geführt werden, da in diesem Fall unmittelbar Frischluft in die Atmosphäre des Glashauses und die Prozessrohluft aus dieser Atmosphäre des Glashauses angesaugt werden kann.

Mit 11 ist ein Wärmetauscher bezeichnet, über welchen wahlweise Abluft gekühlt oder aber Flüssigkeit zum Bewässern der Rotte 1 vorgewärmt werden kann. Derartig vorgewärmte Flüssigkeit kann auch einem Gaswäscher zugeführt werden, über welchen Frischluft befeuchtet wird, wobei zusätzliche Wärmetauscher 11 in die Leitung eingeschaltet sein können. Schließlich kann ein derartiger Wärmetauscher 11 auch zum Vorwärmen der Frischluft im Winter dienen, welche der Filterabluft zugeführt wird, um die entsprechende Absenkung der Feuchtigkeit in der Glashausatmosphäre unter dem Kondensationspunkt zu gewährleisten.

In Fig.2 wurden die Bezugszeichen der Fig.1 beibehalten. Der Wärmetauscher 11 beheizt hier den Wasserkreislauf 12 eines Frischluftwaschers 13, wobei die Frischluft über einen weiteren Wärmetauscher 14 geführt und ein Teilstrom entweder im Wascher 13 befeuchtet oder über die Leitung 9 zur Gänze oder teilweise rückgeführt werden kann. Ein entsprechendes Mischventil ist mit 15 bezeichnet. Bei dieser Anordnung kann auch die Funktion einer Notkühlung erfüllt werden, wenn eine entsprechende Teilmenge über den Wascher 13 in seiner Funktion als Kühlturm geführt wird, wobei auf die im Winter vorteilhafte Vorwärmung des Wasserkreislaufs verzichtet werden kann.

## Patentansprüche

1. Verfahren zum Belüften von Rotte, bei welchem die Luft durch die Rotte in einem geschlossenen Raum hindurchgesaugt wird und die Rotteabluft durch ein Biofilter geleitet wird, **dadurch gekennzeichnet, dass** die durch die Rotte in einem geschlossenen Raum hindurchgesaugte Luft auf Temperaturen zwischen 10 und 35°C gekühlt wird, dass die so gekühlte Abluft gegebenenfalls gemeinsam mit Umgebungsluft durch ein in einem geschlossenen Raum angeordnetes Festbett-Biofilter geleitet wird und dass die aus dem Biofilter abgezogene Filterabluft mit trockener Frischluft versetzt und entfeuchtet und neuerlich durch die Rotte gesaugt wird.

2. Verfahren nach Anspruch 1, **dadurch gekennzeichnet, dass** die Rotte und das Biofilter in wenigstens einem geschlossenen Raum, insbesondere einer geschlossenen Halle, angeordnet sind.

3. Verfahren nach Anspruch 1 oder 2, **dadurch gekennzeichnet, dass** das Biofilter als Gewächshaus für Kulturpflanzen betrieben wird und mit der Rotteabluft befeuchtet und beheizt wird.

4. Verfahren nach einem der Ansprüche 1, 2 oder 3, **dadurch gekennzeichnet, dass** der CO₂ Gehalt und der H₂O Dampfgehalt der Hallen- bzw. Gewächshausluft überwacht und durch Zumischen von Frischluft auf CO₂-Werte unter der jeweiligen MAK und auf an Hallenwänden nicht kondensierenden H₂O Dampfkonzentrationen eingestellt wird.

5. Verfahren nach einem der Ansprüche 1 bis 4, **dadurch gekennzeichnet, dass** die aus der Rotte abgezogene und dem Biofilter zugeführte Rotteabluft auf eine relative Luftfeuchtigkeit von 90 bis 100 Gew.%, vorzugsweise Wasserdampfsättigung, eingestellt wird.

6. Verfahren nach einem der Ansprüche 1 bis 5, **dadurch gekennzeichnet, dass** die Lufttemperaturen zwischen 20 und 30°C eingestellt werden.

7. Verfahren nach einem der Ansprüche 1 bis 6, **dadurch gekennzeichnet, dass** die zur Einstellung einer nicht kondensierenden Hallen- bzw. Gewächshausluft verwendete Frischluft mit der aus der Rotte abgezogenen Luft, insbesondere über einen Wärmetauscher, vorgewärmt wird.

8. Verfahren nach einem der Ansprüche 1 bis 7, **dadurch gekennzeichnet, dass** eine Teilmenge der Frischluft über einen Wäscher geführt und befeuchtet wird und anschließend über einen Mischer der dem Biofilter zugeführten Rotteabluft zugeführt wird.

9. Verfahren nach Anspruch 8, **dadurch gekennzeichnet, dass** der Wasserkreislauf des Frischluftwäschers mit Rotteabluft beheizt wird.

10. Verfahren nach einem der Ansprüche 1 bis 9, **dadurch, gekennzeichnet, dass** Abluftkondensate und Abschlämmungen von Kühlkreisläufen in einem Wasserreservoir, vorzugsweise ausgestaltet als Teich, für Kühlwasser und Nachfeuchtwasser für die Nachfeuchtung des Rottegutes gesammelt und behandelt werden.

11. Verfahren nach einem der Ansprüche 1 bis 10, **dadurch gekennzeichnet, dass** der beheizte Wäscherkreislauf als Teilstrom oder zur Gänze als Notkühlung über einen Kühlturm geführt wird.

## Claims

1. Method for the venting of rotting, in which the air is sucked through the rotting in a closed room and the exhaust air is directed through a biofilter, **characterised in that** the air sucked through the rotting in a closed room is cooled to temperatures between 10°C and 35°C, that the exhaust air cooled in that way is directed through a solid bed - biofilter arranged in a closed room together with ambient air if applicable and that the exhaust air from the filter being drawn off from the biofilter is mixed with dry fresh air and is dehumidified and is again sucked through the rotting.

2. Method according to claim 1, **characterised in that** the rotting and the biofilter are arranged in at least one closed room, in particular a closed hall.

3. Method according to claim 1 or 2, **characterised in that** the biofilter is run as a greenhouse for economic plants and is humidified and heated with the exhaust air from the rotting.

4. Method according to any ane of claims 1,2 or 3, **characterised in that** the CO₂ - content and the H₂O - vapour content of the air in the hall or the greenhouse respectively is monitored and is adjusted by the admixture of fresh air to CO₂ - values below the relevant MAC (maximum allowable concentration) and to H₂O -vapour concentrations not condensing on the walls of the hall.

5. Method according to any one of claims 1 to 4, **characterised in that** the exhaust air sucked from the rotting and directed to the biofilter is adjusted to a relative humidity of air of 90 to 100%, preferably to vapour saturation.

6. Method according to any one of claims 1 to 5, **characterised in that** the air temperatures are adjusted between 20°C and 30°C.

7. Method according to any one of claims 1 to 6, **characterised in that** the fresh air used for the adjustment of a non condensing hall- or greenhouse-air is preheated with the air drawn off from the rotting, in particular by means of a heat exchanger.

8. Method according to any one of claims 1 to 7, **characterised in that** a fraction of the fresh air is directed through a scrubber and is humidified and via a mixer is subsequently directed to the exhaust air from the rotting being directed to the biofilter.

9. Method according to claim 8, **characterised in that** the water circulation of the fresh air-scrubber is heated with exhaust air from the rotting.

10. Method according to any one of claims 1 to 9, **characterised in that** condensates from the exhaust air and sedimentations of the cooling circuits are collected in a water reservoir for cooling water and humidifying water, preferably in the form of a pool, for the subsequent humidification of the material of the rotting and that said condensates and sedimentations are being processed.

11. Method according to any one of claims 1 to 10, **characterised in that** the heated scrubber circuit is directed through a cooling tower partially or as a whole.

## Revendications

1. Procédé pour aérer du compost, dans lequel l'air est aspiré au travers du compost dans un local fermé et l'air extrait du compost est guidé au travers d'un filtre biologique, **caractérisé en ce que** l'air aspiré au travers du compost dans un local fermé est refroidi à des températures entre 10°C et 35°C, que l'air extrait ainsi refroidi est guidé au travers d'un filtre biologique à lit solide arrangé dans un local fermé et que l'air extrait du filtre biologique est mélangé avec de l'air frais sec et est déshumidifié et est de nouveau aspiré au travers du compost.

2. Procédé selon la revendication 1, **caractérisé en ce que** le compost et le filtre biologique sont arrangés dans au moins un local fermé, en particulier dans une halle fermée.

3. Procédé selon la revendication 1 ou 2, **caractérisé en ce que** le filtre biologique est exploité en qualité de serre pour des plantes cultivées et est humidifié et chauffé par l'air extrait du compost.

4. Procédé selon une des revendications 1, 2 ou 3, **caractérisé en ce que** la teneur en CO₂ et la teneur en vapeur de H₂O de l'air de la halle ou de la serre est surveillée et est adjustée à des teneurs en CO₂ au-dessous des VLE (valeurs limites d'exposition au postes de travail) respectives et à des concentrations de vapeur de H₂O non condensant aux murs de la halle.

5. Procédé selon une des revendications 1 à 4, **caractérisé en ce que** l'air extrait du compost et guidé au filtre biologique est ajusté à une humidité relative d'air de 90% à 100%, de préférence à saturation de vapeur d'eau.

6. Procédé selon une des revendications 1 à 5, **caractérisé en ce que** les températures sont ajustés entre 20°C et 30°C.

7. Procédé selon une des revendications 1 à 6, **caractérisé en ce que** l'air frais utilisé pour l'ajustement d'un air de la halle ou de la serre non condensant est préchauffé avec l'air extrait du compost, en particulier à l'aide d'un échangeur thermique.

8. Procédé selon une des revendications 1 à 7, **caractérisé en ce qu'**une fraction de l'air frais est guidée au travers d'un laveur et est humidifiée et ensuite est ajouté à l'air extrait du compost guidé au filtre biologique au travers d'un mélangeur.

9. Procédé selon la revendication 8, **caractérisé en ce que** la circulation d'eau du laveur est chauffée avec l'air extrait du compost.

10. Procédé selon une des revendications 1 à 9, **caractérisé en ce que** des condensations de l'air extrait et des sédimentations des circuits de refroidissement sont amassées dans un réservoir d'eau pour de l'eau de refroidissement et de humidification subséquente, de préférence de forme d'étang, pour la humidification subséquente du matériel à composter et sont traitées.

11. Procédé selon une des revendications 1 à 10, **caractérisé en ce que** la circulation du laveur chauffée est guidée au travers d'une tour de réfrigeration partiellement ou entièrement.
